(19) Europäisches Patentamt
European Patent Office
Office européen des brevets

(11) EP 2 631 612 A2

(12) **EUROPÄISCHE PATENTANMELDUNG**

(43) Veröffentlichungstag:
28.08.2013 Patentblatt 2013/35

(51) Int Cl.:
*G01F 23/284* (2006.01)   *G01F 25/00* (2006.01)

(21) Anmeldenummer: 13000631.5

(22) Anmeldetag: 07.02.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.02.2012 DE 102012003373**

(71) Anmelder: **Krohne Messtechnik GmbH**
**47058 Duisburg (DE)**

(72) Erfinder: **Wegemann, Uwe**
**47443 Moers (DE)**

(74) Vertreter: **Gesthuysen Patent- und Rechtsanwälte**
**Patentanwälte**
**Huyssenallee 100**
**45128 Essen (DE)**

(54) **Verfahren zur Überwachung und Verfahren zum Betreiben eines nach dem Radar-Prinzip arbeitenden Füllstandmesssystems und entsprechendes Füllstandmesssystem**

(57)     Beschrieben und dargestellt ist ein Verfahren zum Prüfen einer Messgerätanordnung (1), wobei die Messgerätanordnung (1) ein Messgerät (2) umfasst, das ausgehend von der Bestimmung einer Messgröße ein von einer Abgreifstelle (3) als Abgriffssignal abgreifbares Ausgangssignal erzeugt.

Der Erfindung liegt die Aufgabe zugrunde, ein Verfahren zur Überwachung einer Messgerätanordnung anzugeben, das eine inline-Prüfung ohne die Unterbrechung der Messung bzw. der Übermittlung der Messwerte darstellt.

Die Aufgabe wird bei dem in Rede stehenden Verfahren dadurch gelöst, dass derartig auf das Messgerät (2) eingewirkt wird, dass das Messgerät (2) ein Testsignal als Ausgangssignal erzeugt, und dass das Ausgangssignal und/oder ein davon abhängiges Signal derartig beeinflusst werden/wird, dass das Abgriffssignal ein vorgebbares Einstellsignal ist.

Fig. 1

**Beschreibung**

Die Erfindung betrifft ein Verfahren zur Überwachung eines als FMCW-Radargerät arbeitenden Füllstandmessgerätes, wobei während einer Messung eines Füllstands eines Mediums die Frequenz eines vom Füllstandmessgerät zu sendenden Radarsignals mit einem Set von vorgebbaren Messparametern moduliert wird, und wobei aus mindestens einem während der Messung des Füllstands empfangenen Empfangssignal ein Messwert des Füllstands ermittelt wird. Die Erfindung betrifft ferner ein Verfahren zum Betreiben eines als FMCW-Radargerät arbeitenden Füllstandmessgerätes, wobei während einer Messung eines Füllstands eines Mediums die Frequenz eines vom Füllstandmessgerät zu sendenden Radarsignals mit einem Set von vorgebbaren Messparametern moduliert wird, und wobei aus mindestens einem während der Messung des Füllstands empfangenen Empfangssignal ein Messwert des Füllstands ermittelt wird. Zudem betrifft die Erfindung ein als FMCW-Radargerät arbeitendes Füllstandmessgerät.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks oder Silos zu bestimmen. Das durch die Messgeräte umgesetzte Laufzeitverfahren baut auf der physikalischen Gesetzmäßigkeit auf, dass die Laufstrecke z. B. eines elektromagnetischen Signals gleich dem Produkt aus Laufzeit und Ausbreitungsgeschwindigkeit ist. Im Fall einer Messung des Füllstands eines Mediums - beispielsweise einer Flüssigkeit oder eines Schüttguts - in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums". Der Füllstand lässt sich aus der Differenz zwischen dem bekannten Abstand der Antenne zum Boden des Behälters und dem durch die Messung bestimmten Abstand der Oberfläche des Mediums zur Antenne berechnen. Bei den gesendeten und empfangenen elektromagnetischen Signalen handelt es sich zumeist um Mikrowellenstrahlung.

Ein spezielles Radar-Füllstandmessverfahren ist das FMCW-Radar-Verfahren (FMCW = Frequency Modulated Continuous Wave). Für die Messung wird ein Mikrowellensignal kontinuierlich ausgesandt, wobei die Frequenz des Signals mit einem gewissen Satz von Modulationsparametern moduliert wird. Typischerweise geschieht dies in aufeinanderfolgenden Rampen als Form des Verlaufs der Modulation, deren Modulationshub - also der Differenz zwischen der kleinsten und der größten Frequenz - und Modulationsdauer - also die Zeitspanne, in der der Modulationshub durchlaufen wird - vorgegeben werden kann. Durch die Verzögerungzeit während der Signalausbreitung hat sich die Sendefrequenz beim Empfang des reflektierten Signals geändert, so dass sich aus der Differenzfrequenz der Abstand der reflektierenden Oberfläche und damit der Füllstand ergibt. Im Stand der Technik wird hierfür beispielsweise ein als Mischung bekannter Prozess verwendet, durch den während der Dauer der Durchstimmung bzw. der Modulation des abzustrahlenden Radarsignals ein Signal mit deutlich niedriger Frequenz erzeugt wird. Für eine weitere Verarbeitung wird zumeist eine diskrete Fouriertransformation angewendet.

In der DE 10 2009 057 191 A1 wird beschrieben, dass sich durch unterschiedliche Parameter der Modulation der Frequenz Messgenauigkeiten in unterschiedlichen Abstandsbereichen erzielen lassen. Der DE 10 2009 001 265 A1 kann entnommen werden, dass Sätze von Modulationsparametern darauf optimierbar sind, dass sie eher für die eigentliche Messung oder eher für das Erkennen eines Erblindens des Radarsensors geeignet sind.

Anwendungen finden die vorgenannten Füllstandmessgeräte z. B. in der chemischen Industrie, in der Wasser- und Abwasserwirtschaft, in der Pharmaindustrie, im Lebensmittelbereich, bei der Energieerzeugung sowie in der Öl- und Gasindustrie. Insbesondere für sicherheitskritische Anwendungen wird für die verwendeten Messgeräte eine funktionale Sicherheit (eingestuft in den Klassen Sicherheits-Integritätslevel SIL 1 bis 4) angestrebt. Aus dem angestrebten Sicherheits-Level ergeben sich die sicherheitsgerichteten Konstruktionsprinzipien, die einzuhalten sind, um das Risiko einer Fehlfunktion des Messgerätes zu minimieren. Bekannte Methoden bestehen in der redundanten oder diversitären Ausgestaltung der Messgeräte. Dies bedeutet, dass Komponenten doppelt oder mehrfach ausgelegt bzw. von unterschiedlichen Herstellern stammen oder von unterschiedlichem Typ sind. Mit beiden Varianten gehen jeweils erhöhte Kosten einher. Bei der redundanten Ausgestaltung steigt auch der Raumbedarf der Komponenten bzw. es müssen Einheiten vorgesehen sein, die die redundanten Komponenten passend ansteuern oder deren Signale auswerten. Zudem kann sich die Zeit für die Messungen erhöhen, da das Vergleichen der Messergebnisse bzw. das Erkennen von Fehlern durchgeführt wird. Eine für die Beurteilung eines Messgerätes in Hinblick auf die Sicherheit relevante Größe ist die Safe Failure Fraction (SFF), die aussagt, wie groß der Anteil der ungefährlichen Fehler an den insgesamt möglichen Fehlern ist. Ein ungefährlicher Fehler ist dabei ein Fehler, der zwar für die Sicherheit relevant ist, der jedoch entweder erkannt wird oder den Transmitter in einen sicheren Zustand überführt. Von großem Vorteil ist es, wenn Fehler durch eine Selbstüberwachung vom Messgerät selbst erkannt werden.

Der Erfindung liegt daher die Aufgabe zugrunde, ein Verfahren zur Überwachung eines als FMCW-Radargerät arbeitenden Füllstandmessgerätes, ein Verfahren zum Betreiben eines als FMCW-Radargerät arbeitenden Füllstandmessgerätes und ein als FMCW-Radargerät arbeitendes Füllstandmessgerät anzugeben, die eine möglichst einfache Selbstüberwachung ermöglichen.

Das erfindungsgemäße Verfahren zur Überwachung eines als FMCW-Radargerät arbeitenden Füllstandmessgerätes, bei dem die zuvor hergeleitete und aufgezeigte Aufgabe gelöst ist, ist zunächst und im Wesentlichen durch folgende Schritte gekennzeichnet: während einer Testphase wird die Frequenz des zu sendenden Radarsignals mit mindestens einem Set von vorgebbaren Testparametern moduliert. Aus mindestens einem während der Testphase empfangenen Testempfangssignal wird ein Testmesswert ermittelt und mindestens der Testmesswert wird in Hinblick auf die Überwachung ausgewertet. Das zu sendende Radarsignal wird während der normalen Messungen mit einem Set (oder Satz) von vorgebbaren Messparametern gemäß dem FMCW-Verfahren moduliert. Während der Testphase erfolgt die Modulation jedoch mit mindestens einem Set von vorgebbaren Testparametern, die sich insbesondere in mindestens einem Parameter vom Set der Messparameter unterscheiden. Der sich aus der Messung mit dem Set von Testparametern ergebende Testmesswert wird dann in Bezug auf die Überwachung ausgewertet.

In einer vorteilhaften Ausgestaltung ist es vorgesehen, dass während der Testphase die Frequenz des zu sendenden Radarsignals mit unterschiedlichen Sets von vorgebbaren Testparametern moduliert wird, wobei sich mindestens ein Set von Testparametern von dem Set von Messparametern unterscheidet. Weiterhin wird für mindestens zwei Sets von Testparametern jeweils mindestens ein zugehöriges Testempfangssignal empfangen, und aus den mindestens zwei Testempfangssignalen wird jeweils ein zugeordneter Testmesswert ermittelt. Dann werden die mindestens zwei Testmesswerte in Hinblick auf die Überwachung ausgewertet. Während einer Testphase erfolgen mehrere, d. h. zumindest zwei Messungen mit unterschiedlichen Sets von Testparametern. Insbesondere ein Set von Testparametern ist unterschiedlich zu dem Set der Messparameter. Mit den unterschiedlichen Parametersets lassen sich unterschiedliche reflektierte Radarsignale empfangen, aus denen wiederum unterschiedliche Testmesswerte ermittelt werden. Die mindestens zwei Testmesswerte lassen sich dann für die Überwachung weiter verarbeiten. In einer Ausgestaltung wird während der Testphase die Frequenz des zu sendenden Radarsignals mit mindestens einem mit dem Set von Messparametern im Wesentlichen identischen Set von Testparametern moduliert. In einer alternativen Ausgestaltung unterscheidet sich auch das obige zweite Set von Testparametern von dem Set der Messparameter.

Eine vorteilhafte Ausgestaltung widmet sich der Auswertung des Testmesswerts oder der Testmesswerte. Dabei wird der mindestens eine Testmesswert für die Auswertung in Hinblick auf die Überwachung in Relation zu mindestens einem der Testphase zugeordneten Ist-Messwert des Füllstands gesetzt. Insbesondere wird ein Differenzwert zwischen dem mindestens einen Testmesswert und dem der Testphase zugeordneten Ist-Messwert ermittelt. Dieser Ausgestaltung schließt sich als eine Möglichkeit die Ausgestaltung an, dass der mindestens eine der Testphase zugeordnete Ist-Messwert des Füllstands während oder vor oder nach der Testphase ermittelt wird. Die Ermittlung des zugeordneten Ist-Messwerts des Füllstands, d. h. des aktuellen Messwerts (insofern kein Fehler vorliegt, der eine wirkliche Messung unmöglich macht) erfolgt vor oder nach der Testphase oder in einer Ausgestaltung während der Testphase selbst, indem beispielsweise eine Testmessung bzw. eine Messung als Teil einer Testphase - wie oben beschrieben - mit dem Set an Testparametern erfolgt, das gleich dem Set der Messparameter bei einer normalen Messung ist. Wird für die Auswertung die Differenz der Testmesswerte zum zugeordneten Ist-Messwert des Füllstands gebildet, so stellen sich in Abhängigkeit von den Modulationsparametern unterschiedliche Werte ein.

In einer mit den vorhergehenden Ausgestaltungen in Verbindung stehenden Ausgestaltung ist vorgesehen, dass für die Auswertung des mindestens einen Testmesswerts in Hinblick auf die Überwachung mindestens eine Abhängigkeit des Testmesswerts vom der Testphase zugeordneten Ist-Messwert des Füllstands ermittelt wird. Dann wird die ermittelte Abhängigkeit mit einer für das Füllstandmessgerät hinterlegten Abhängigkeit verglichen. In dieser Ausgestaltung wird ermittelt, welche Abhängigkeit die gemessenen Testmesswerte vom vorgegebenen Ist-Messwert des Füllstands aufweisen. Es wird beispielsweise, wie zuvor genannt, die Differenz zwischen vorgegebenem Ist-Messwert und Testmesswert ermittelt. Der sich daraus ergebende Zusammenhang wird mit einem hinterlegten Sollzusammenhang verglichen und das sich einstellende Vergleichsergebnis dient der Überwachung des Messgerätes. Treten beispielsweise Abweichungen zwischen den Abhängigkeiten über ein vorgegebenes Maß hinaus auf, so kann dies als das Vorliegen eines Fehlers im Messgerät interpretiert werden.

In einer weiteren Ausgestaltung werden die zuvor genannten Ausgestaltungen weitergeführt. Dabei ist vorgesehen, dass für die Auswertung der mindestens zwei Testmesswerte, die jeweils einem anderen Set von Testparametern zugeordnet sind, in Hinblick auf die Überwachung mindestens eine Abfolge der Abhängigkeiten der Testmesswerte vom der Testphase zugeordneten Ist-Messwert des Füllstands ermittelt und die ermittelte Abfolge der Abhängigkeiten mit einer für das Füllstandmessgerät hinterlegten Abfolge verglichen wird. Alternativ oder ergänzend besteht die Ausgestaltung darin, dass für die Auswertung der mindestens zwei Testmesswerte in Hinblick auf die Überwachung mindestens eine Abfolge der Abhängigkeiten der Testmesswerte voneinander ermittelt und die ermittelte Abfolge der Abhängigkeiten mit einer für das Füllstandmessgerät hinterlegten Abfolge verglichen wird. In der Ausgestaltung wird das Muster der Abfolge des Zusammenhanges zwischen jeweils einem Testmesswert und dem der Testphase zugeordneten Ist-Messwert oder der Zusammenhang der Testwerte voneinander mit einer jeweils hinterlegten Abfolge verglichen und für die Überwachung ausgewertet. Es wird in dieser Ausgestaltung ermittelt, wie sich die Testmesswerte in Abhängigkeit von den unterschiedlichen Modulationsparametern verändern. Das Muster der Abfolge der Abhängigkeiten vom Ist-Messwert bzw. von den Testmesswerten untereinander wird dann für die Überwachung mit hinterlegten Daten verglichen.

Die zuvor hergeleitete und aufgezeigte Aufgabe ist in einer weiteren Lehre der Erfindung bei dem eingangs genannten Verfahren zum Betreiben eines als FMCW-Radargerät arbeitenden Füllstandmessgerätes durch eine Abfolge von zumindest den folgenden Schritten gelöst:

Während einer Initialisierungsphase wird die Frequenz des vom Füllstandmessgerät zu sendenden Radarsignals mit mindestens einem Set von vorgebbaren Initialisierungsparametern moduliert. Aus mindestens einem während der Initialisierungsphase empfangenen Initialisierungsempfangssignal wird ein Initialisierungsmesswert ermittelt. Dann wird eine Abhängigkeit des Initialisierungsmesswerts von einem Initialisierungs-Wert ermittelt, z. B. berechnet. Schließlich wird mindestens die ermittelte Abhängigkeit als Standardabhängigkeit hinterlegt, d. h. beispielsweise in einem Datenspeicher abgespeichert.

Der Initialisierungs-Wert, von dem die Abhängigkeit des sich bei der Modulation mit dem Set von Initialisierungsparametern ergebende Initialisierungsmesswert ermittelt wird, ist in einer Variante ein Ist-Messwert des Füllstands, der der Initialisierungsphase zugeordnet ist. Der Ist-Messwert ist - wie beim obigen Überwachungsverfahren - vorzugsweise der Messwert, der dem aktuell während der Initialisierungsphase vorliegenden Füllstand des Mediums entspricht.

In einer weiteren Ausgestaltung werden während der Initialisierungsphase mehrere Sets von Modulationsparametern aufgewendet, um entsprechend viele unterschiedliche Messwerte zu gestalten. Der andere Wert ist dann jeweils ein anderer Initialisierungsmesswert. Dementsprechend werden in dieser Ausgestaltungen die Abhängigkeiten der Initialisierungsmesswert voneinander ermittelt und als Standardabhängigkeiten abgespeichert.

Die Initialisierungsphase wird daher analog zu einer der obigen Ausgestaltungen des Überwachungsverfahrens ausgestaltet. In den sich der Initialisierungsphase anschließenden Testphasen werden beispielsweise die oben diskutierten Ausgestaltungen des Verfahrens zur Überwachung angewendet. Eine solche Initialisierungsphase kann beispielsweise vor der eigentlichen Inbetriebnahme eines neuen Messgerätes vorgenommen werden.

Eine Ausgestaltung sieht insbesondere vor, dass während einer Testphase die Frequenz des zu sendenden Radarsignals mit mindestens einem Set von vorgebbaren Testparametern moduliert wird, wobei das mindestens eine Set von Testparametern im Wesentlichen gleich dem Set von Initialisierungsparametern ist. Aus mindestens einem während der Testphase empfangenen Testempfangssignal wird ein Testmesswert ermittelt, und es wird mindestens eine Abhängigkeit des Testmesswerts von einem weiteren Wert ermittelt. Dann wird die während der Testphase ermittelte Abhängigkeit mit der Standardabhängigkeit verglichen, und ausgehend von dem Vergleich kann auf den Zustand des Messgerätes, d. h. auf dessen Fehlerfreiheit oder Fehlerhaftigkeit geschlossen werden. Der andere Wert ist - wie zuvor bei der Initialisierungsphase beschrieben - entweder ein der Testphase zugeordneter Ist-Messwert des Füllstands oder der andere Wert ergibt sich bei einer Abfolge von unterschiedlichen Sets von Modulationsparametern jeweils aus den anderen Testmesswerten. Die Sets der Testparameter sind dabei in einer Ausgestaltung gleich den Sets der Initialisierungsparameter. Dies erlaubt einen einfachen Vergleich der Abhängigkeiten. Insbesondere bei der Verwendung von mehreren Sets an Modulationsparametern wird ein Muster der Abhängigkeiten des jeweiligen Füllstandmessgerätes während der Initialisierung ermittelt und abgelegt und während der Testphasen mit den jeweils erhaltenen Abhängigkeiten verglichen. Die beiden zuvor beschriebenen Varianten für die Festlegung des "anderen Wertes" können dabei auch miteinander kombiniert werden.

Weiterhin wird die zuvor hergeleitete und aufgezeigte Aufgabe in einer weiteren Lehre der Erfindung bei einem eingangs beschriebenen als FMCW-Radargerät arbeitenden Füllstandmessgerät dadurch gelöst, dass es nach einer der oben beschriebenen Ausgestaltungen des Verfahrens zum Betreiben betrieben wird und/oder dass es nach einer der obigen Ausgestaltungen des Verfahrens zur Überwachung überwacht wird. Dabei umfassen die Parameter (diese bilden dann jeweils die Sets von Mess-, Test- oder Initialisierungsparameter), mit denen die Frequenz des Radarsignals moduliert wird, insbesondere eine Form der Modulierung, z. B. rampenförmig, eine Modulation der Dauer, eine Modulation des Frequenzhubs oder die Wahl zwischen einer diskreten bzw. schrittweisen oder einer kontinuierlichen Modulation.

Im Einzelnen gibt es eine Vielzahl von Möglichkeiten, das erfindungsgemäße Verfahren zur Überwachung eines als FMCW-Radargerät arbeitenden Füllstandmessgerätes, das erfindungsgemäße Verfahren zum Betreiben eines als FMCW-Radargerät arbeitenden Füllstandmessgerätes und das erfindungsgemäße als FMCW-Radargerät arbeitendes Füllstandmessgerät auszugestalten und weiterzubilden. Dazu wird verwiesen einerseits auf die dem Patentanspruch 1 und dem Patentanspruch 8 nachgeordneten Patentansprüche und den Patentanspruch 10, andererseits auf die folgende Beschreibung von Ausführungsbeispielen in Verbindung mit der Zeichnung. In der Zeichnung zeigen

Fig.1    eine schematische, im Wesentlichen die funktionalen Wirkzusammenhänge anhand eines Blockschaltbilds verdeutlichende Darstellung einer Messanordnung bei einem Behälter mit einem erfindungsgemäßen Füllstandmessgerät,

Fig. 2    eine schematische Abfolge von Modulationen der Frequenz der Radarsignale und der sich daraus ergebenden zugeordneten Messwerte und

Fig. 3    ein beispielhaftes Flussdiagramm für einen Ablauf des erfindungsgemäßen Verfahrens zum Betreiben eines FMCW-Radarfüllstandmessgerätes.

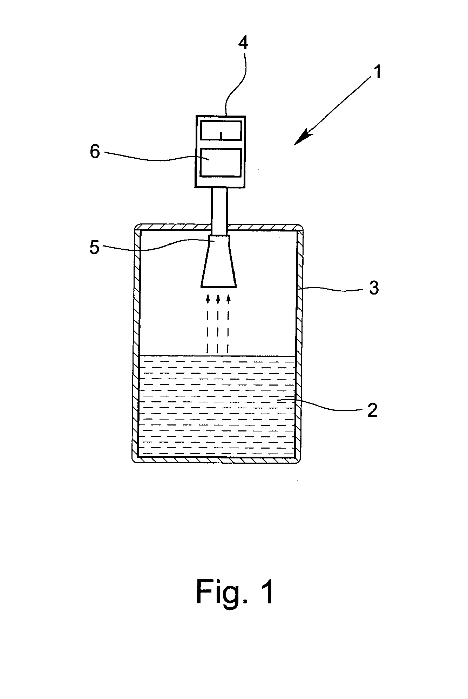

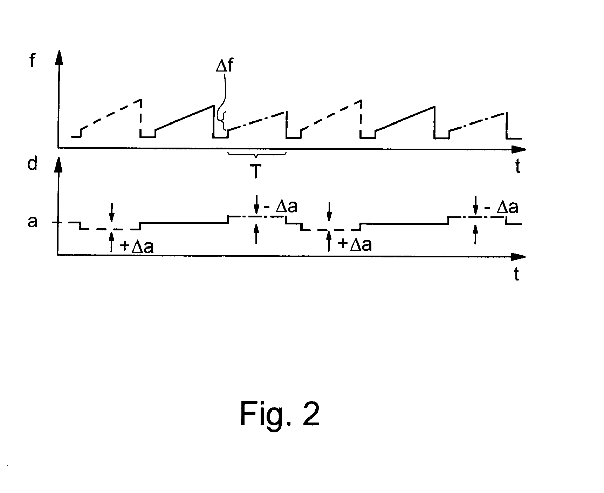

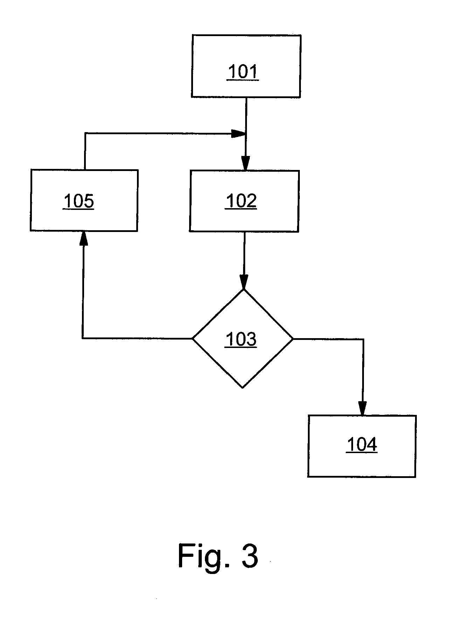

In der Fig. 1 ist eine Messanordnung zum Messen eines Füllstands eines Mediums in einem Behälter mit einem erfindungsgemäßen Füllstandmessgerät dargestellt. In der Fig. 2 sind schematisch die Verläufe der Modulation der Frequenz der Radarsignale und die zugehörigen Abstandswerte dargestellt. Die Fig. 3 zeigt einen möglichen Ablauf der Schritte des erfindungsgemäßen Betreibens eines Füllstandmessgerätes. Dabei sollen jeweils lediglich die Wirkzusammenhänge zwischen den verschiedenen Bestandteilen oder Schritten erkennbar werden.

Die Fig. 1 zeigt im Blockschaltbild ein Messgerät 1, das als FMCW-Radarmessgerät betrieben wird und das der Ermittlung des Füllstands des Mediums 2 in dem Behälter 3 dient. Bei dem Medium 2 handelt es sich beispielsweise um eine Flüssigkeit, die sich in einem Tank als Behälter 3 befindet. Das Messgerät 1 weist eine Elektronikeinheit 4 - hier beispielhaft mit einer schematischen Anzeigeeinheit - auf, die die in Richtung der Oberfläche des Mediums 2 abzustrahlenden Radarsignale erzeugt und die nach der Reflektion am Medium wieder empfangenen Radarsignale - in der Darstellung durch die Pfeile angedeutet - auswertet. Weiterhin ist eine Antenne 5 zum Ausstrahlen und Empfangen der Radarsignale vorhanden. Die Elektronikeinheit 4 ist insbesondere derartig ausgestaltet, dass sie die Frequenz des abzustrahlenden Radarsignals moduliert. In der Elektronikeinheit 4 ist ein Datenspeicher 6 vorgesehen, in dem die während der Initialisierungsphase zu ermittelnden Abhängigkeiten der Testmesswerte von dem der Testphase zugeordneten Ist-Messwert des Füllstands und/oder die Abhängigkeiten der Testmesswerte voneinander und/oder die entsprechenden Abfolgen der Abhängigkeiten als Muster abgelegt werden.

In der Fig. 2 zeigt der obere Graph den Ablauf der Modulation der Frequenz des auszusendenden Radarsignals. Dargestellt sind zwei Gruppen mit jeweils drei unterschiedlichen Sets (einmal mit gestrichelten, dann mit durchgezogenen und schließlich mit strich-punktierten Linien dargestellt) an Modulationsparametern. Das jeweils mittlere Modulationsprofil (durchgezogene Linie) ist mit dem Set an Messparametern gebildet. Das bedeutet, dass sich mit dieser Modulation der gegebene Ist-Messwert a des Abstandes zum Medium ergibt. Der Modulationshub, d. h. der Frequenzbereich, über den moduliert wird, ist beim vorhergehenden Profil größer (gestrichelte Linie) und beim nachfolgenden Profil (strich-punktierte Linie) kleiner als beim Set der Messparameter. Die Rampenform und die Zeitdauer, innerhalb der die Modulation stattfindet, sind jeweils bei den einzelnen Sets an Modulationsparametern gleich. Ebenfalls soll jeweils ein linearer und kontinuierlicher Anstieg der Frequenz erzeugt werden. Der untere Graph zeigt die Füllstände d des Mediums (= Tankhöhe - Abstand a), die sich aus den Messwerten der hier insgesamt sechs Messungen ergeben. Die mittleren Werte mit dem an die Messung optimal angepassten Set an Modulationsparametern ergibt jeweils den Wert a. Die vorhergehenden bzw. folgenden Sets an Testparametern führen zu zu großen Abständen (+Δa) oder zu zu kleinen Abständen (-Δa). Aus der Relation der Testmesswerte, die in Abhängigkeit von den Sets an Modulationsparametern absichtlich "falsche" Messwerte für den Füllstand darstellen, zueinander bzw. zu einem Ist-Messwert, der hier während der Testphase gewonnen wird und daher auch ein Test-Messwert ist, lässt sich ein Muster der den jeweiligen Sets von Modulationsparametern zugeordneten Abhängigkeiten entnehmen. Ergibt sich aus einer Testphase ein anderes Muster oder eine andere Abhängigkeit, so ergibt sich daraus, dass sich etwas im Messgerät geändert haben muss, oder mithin, dass ein Fehler vorliegt.

Für die im Ausführungsbeispiel gemäß Fig.2 behandelten FMCW-Füllstandmessgeräte, bei denen die Frequenz des gesendeten Radarsignals entlang einer Rampe linear moduliert wird, gilt bekanntlich der folgende Zusammenhang zwischen dem Abstand a von Antenne 5 zur Oberfläche des Mediums 2, dem Modulationshub $\Delta f$, der Modulationsdauer $T$ und der gemessenen Differenzfrequenz $f_m$ zwischen Sende- und Empfangssignal, wobei c die Ausbreitungsgeschwindigkeit des Radarsignals ist:

$$a = f_m \cdot \frac{c}{2} \cdot \frac{T}{\Delta f}.$$

Ein Set von Modulationsparametern - und damit ein Set von Messparametern und Testparametern - weist hier also den Modulationshub $\Delta f$ und die Modulationsdauer $T$ auf. Bei dem in Fig. 2 dargestellten Test wird als Testparameter nur der Modulationshub $\Delta f$ verwendet und variiert. Der Modulationshub $\Delta f$ wird im Testbetrieb also physikalisch verändert - das ausgesendete Radarsignal durchläuft tatsächlich einen größeren oder kleineren Frequenzhub -, die Parameter in der Berechnung gemäß der zuvor angegebenen Gleichung bleiben aber unverändert, so dass sich der Hub +- Δa einstellt.

In der Fig. 3 wird ein beispielhafter Ablauf des erfindungsgemäßen Verfahrens zum Betreiben eines als FMCW-Radargerät arbeitenden Füllstandmessgerätes gezeigt.

Im Schritt 101 wird während einer Initialisierungsphase ermittelt, welche Werte für den Füllstand des Mediums sich aus den empfangenen Radarsignalen ergeben, wenn die gesendeten Radarsignale mit mindestens einem Set von Modulationsparametern moduliert werden. Werden beispielsweise drei Sets verwendet, so lassen sich drei unterschiedliche Signale empfangen, aus denen sich wiederum drei unterschiedliche Werte ermitteln lassen. Damit ergeben sich aus drei bekannten Parameter-Sets drei Werte für den Füllstand des Mediums. Ist wie im Beispiel der Fig. 2 ein Testparameter-Set gleich einem Messparameter-Set, so ist ein ermittelter Wert gleich dem aktuell gegebenen Füllstand des Mediums. Alternativ kann ein Wert, der sich aus der normalen Messung ergeben würde oder der vor der Initialisierungsphase ermittelt wurde, in das Messgerät eingegeben werden. Aus den drei Werten lässt sich dann entweder das Verhältnis zum aktuellen, d. h. wirklichen Ist-Messwert ermitteln oder es können die Verhältnisse der Werte untereinander, z. B. das Verhältnis des ersten zum zweiten und des zweiten zum dritten Wert, ermittelt und passend abgelegt werden. Die Verhältnisse der Werte zueinander oder zum real vorliegenden Füllstandwert sind Soll-Verhältnisse oder Soll-Abhängigkeiten für die Überwachung bzw. Kontrolle des Füllstandmessgerätes.

Im Schritt 102 wird beim eingebauten Füllstandmessgerät das auszusendende Radarsignal mit - im hier besprochenen Beispiel - drei Sets von Parametern moduliert, und es werden aus den drei empfangenen Signalen drei Testmesswerte ermittelt. Dies für den Fall, dass die Sets der Testparameter gleich den Sets der Initialisierungsparameter sind und dass beispielsweise auch die Abfolge der Sets gleich ist. Unterschiedliche Ausgestaltungen der Sets oder der Abfolge sind auch im Rahmen der Erfindung, können jedoch ggf. den Auswerteaufwand erhöhen.

Im Schritt 103 findet der Vergleich der Abfolge der Abhängigkeiten der drei Testmesswerte vom der Überprüfung zugeordneten - d. h. hier z. B. während der Testphase ermittelten - Ist-Messwert des Füllstands mit der während der Initialisierungsphase hinterlegten Abfolge statt, woraus ein Prüfungsergebnis ermittelt wird.

Ausgehend vom Prüfungsergebnis kommt es im Schritt 104 - durch eine Abweichung der ermittelten Abfolge der Abhängigkeiten von dem hinterlegten Muster - zu einer Fehlermeldung oder im Schritt 105 wird eine Messung oder es werden vorgebbar viele Messungen des Füllstands vorgenommen. An den Schritt 105 schließt sich im hier gezeigten Beispiel die Überwachung mit Schritt 102 an. Das erfindungsgemäße Überwachungsverfahren umfasst in dem dargestellten Beispiel die Schritte 102 und 103 bzw. 104 und 105 als mögliche Folgen der Überwachung. Der dargestellte Ablauf ist dabei nur ein Beispiel für das erfindungsgemäße Verfahren zur Überwachung bzw. für das Verfahren zum Betreiben des Füllstandmessgerätes. So kann beispielsweise nach jeder Messung mindestens eine Testphase stattfinden.

**Patentansprüche**

1. Verfahren zur Überwachung eines als FMCW-Radargerät arbeitenden Füllstandmessgerätes (1), wobei während einer Messung eines Füllstands eines Mediums (2) die Frequenz eines vom Füllstandmessgerät (1) zu sendenden Radarsignals mit einem Set von vorgebbaren Messparametern moduliert wird, und wobei aus mindestens einem während der Messung des Füllstands empfangenen Empfangssignal ein Messwert des Füllstands ermittelt wird,
   **dadurch gekennzeichnet,**
   **dass** während einer Testphase die Frequenz des zu sendenden Radarsignals mit mindestens einem Set von vorgebbaren Testparametern moduliert wird, dass aus mindestens einem während der Testphase empfangenen Testempfangssignal ein Testmesswert ermittelt wird, und dass mindestens der Testmesswert in Hinblick auf die Überwachung ausgewertet wird.

2. Verfahren nach Anspruch 1, **dadurch gekennzeichnet, dass** während der Testphase die Frequenz des zu sendenden Radarsignals mit unterschiedlichen Sets von vorgebbaren Testparametern moduliert wird, wobei sich mindestens ein Set von Testparametern von dem Set von Messparametern unterscheidet, dass für mindestens zwei Sets von Testparametern jeweils mindestens ein zugehöriges Testempfangssignal empfangen wird, dass aus den mindestens zwei Testempfangssignalen jeweils ein zugeordneter Testmesswert ermittelt wird, und dass mindestens die mindestens zwei Testmesswerte in Hinblick auf die Überwachung ausgewertet werden.

3. Verfahren nach Anspruch 2, **dadurch gekennzeichnet, dass** während der Testphase die Frequenz des zu sendenden Radarsignals mit mindestens einem mit dem Set von Messparametern im Wesentlichen identischen Set von Testparametern moduliert wird.

4. Verfahren nach einem der Ansprüche 1 bis 3, **dadurch gekennzeichnet, dass** der mindestens eine Testmesswert für die Auswertung in Hinblick auf die Überwachung in Relation zu mindestens einem der Testphase zugeordneten Ist-Messwert des Füllstands gesetzt wird.

**5.** Verfahren nach Anspruch 4, **dadurch gekennzeichnet, dass** der mindestens eine der Testphase zugeordnete Ist-Messwert des Füllstands während oder vor oder nach der Testphase ermittelt wird.

**6.** Verfahren nach Anspruch 4 oder 5, **dadurch gekennzeichnet, dass** für die Auswertung des mindestens einen Testmesswerts in Hinblick auf die Überwachung mindestens eine Abhängigkeit des Testmesswerts vom der Testphase zugeordneten Ist-Messwert des Füllstands ermittelt wird, und dass die ermittelte Abhängigkeit mit einer für das Füllstandmessgerät hinterlegten Abhängigkeit verglichen wird.

**7.** Verfahren nach Anspruch 2 oder 3 und nach Anspruch 4 oder 5, **dadurch gekennzeichnet, dass** für die Auswertung der mindestens zwei Testmesswerte in Hinblick auf die Überwachung mindestens eine Abfolge der Abhängigkeiten der Testmesswerte vom der Testphase zugeordneten Ist-Messwert des Füllstands ermittelt und die ermittelte Abfolge der Abhängigkeiten mit einer für das Füllstandmessgerät hinterlegten Abfolge verglichen wird, und/oder dass für die Auswertung der mindestens zwei Testmesswerte in Hinblick auf die Überwachung mindestens eine Abfolge der Abhängigkeiten der Testmesswerte voneinander ermittelt und die ermittelte Abfolge der Abhängigkeiten mit einer für das Füllstandmessgerät hinterlegten Abfolge verglichen wird.

**8.** Verfahren zum Betreiben eines als FMCW-Radargerät arbeitenden Füllstandmessgerätes (1), wobei während einer Messung eines Füllstands eines Mediums (2) die Frequenz eines vom Füllstandmessgerät (1) zu sendenden Radarsignals mit einem Set von vorgebbaren Messparametern moduliert wird, und wobei aus mindestens einem während der Messung des Füllstands empfangenen Empfangssignal ein Messwert des Füllstands ermittelt wird,
**dadurch gekennzeichnet,**
**dass** während einer Initialisierungsphase die Frequenz des vom Füllstandmessgerät (1) zu sendenden Radarsignals mit mindestens einem Set von vorgebbaren Initialisierungsparametern moduliert wird, dass aus mindestens einem während der Initialisierungsphase empfangenen Initialisierungsempfangssignal ein Initialisierungsmesswert ermittelt wird, dass eine Abhängigkeit des Initialisierungsmesswerts von einem Initialisierungs-Wert ermittelt wird, und dass mindestens die ermittelte Abhängigkeit als Standardabhängigkeit hinterlegt wird.

**9.** Verfahren nach Anspruch 8, **dadurch gekennzeichnet, dass** während einer Testphase die Frequenz des zu sendenden Radarsignals mit mindestens einem Set von vorgebbaren Testparametern moduliert wird, wobei das mindestens eine Set von Testparametern im Wesentlichen gleich dem Set von Initialisierungsparametern ist, dass aus mindestens einem während der Testphase empfangenen Testempfangssignal ein Testmesswert ermittelt wird, dass mindestens eine Abhängigkeit des Testmesswerts von einem weiteren Wert ermittelt wird, und dass die ermittelte Abhängigkeit mit der hinterlegten Standardabhängigkeit verglichen wird.

**10.** Als FMCW-Radargerät arbeitendes Füllstandmessgerät (1), das nach dem Verfahren der Ansprüche 8 oder 9 betreibbar ist und/oder das nach dem Verfahren der Ansprüche 1 bis 7 überwachbar ist.

Fig. 1

Fig. 2

```
        ┌─────────┐
        │   101   │
        └─────────┘
             │
             ▼
┌─────────┐     ┌─────────┐
│   105   │     │   102   │
└─────────┘     └─────────┘
                     │
                     ▼
                  ◇ 103 ◇
                     │
                     ▼
              ┌─────────┐
              │   104   │
              └─────────┘
```

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009057191 A1
- DE 102009001265 A1